# EUROPEAN PATENT APPLICATION

(11) **EP 4 706 800 A1**
(43) Date of publication of application: **11.03.2026**
(21) Application number: 24198934.2
(22) Date of filing: 06.09.2024
(51) Int. Cl.: B01D 53/04, B01D 53/047

(54) **AN ENERGY EFFICIENT INDIRECT HEATING PROCESS FOR DIRECT AIR CAPTURE APPLICATIONS**

(71) Applicant: Siemens Energy Global GmbH & Co. KG, 81739 München (DE)
(72) Inventor: Heinze, Christoph, 04416 Markkleeberg (DE); Lempke, Markus, 87509 Immenstadt (DE); Svensson, Oscar, 582 55 Linköping (SE); Jaksch, Peter, 60211 Norrköping (SE)

(57) **Abstract**

In one aspect, an indirect heat transfer system for use in carbon capture, includes at least one sorbent filter enclosed in a frame, a sorbent filter shape defined by a shape of the frame, a flow path through the frame and the at least one sorbent filter, a fluid circuit within the frame and adjacent to the at least one sorbent filter. A heating fluid to heat the sorbent filter during a desorption cycle to release CO₂ and water vapor. A cooling fluid circulated through the fluid circuit and extracting heat from the at least one sorbent filter and condensing an amount of water vapor, a vacuum pump that lowers the partial pressure of CO₂ within the indirect cooling system after the amount of water vaper has been condensed, an amount of liquid water and an amount of CO₂ are extracted from the indirect cooling system.

## Description

### BACKGROUND

Direct Air Capture (DAC) is usually a batch process that consists of two stages: adsorption and desorption. During the adsorption phase a sorbent is loaded with CO2 from the atmosphere by blowing air through the sorbent. After a sufficient amount of time (usually around 1 hour) the sorbent has a high enough CO2 loading to start the desorption phase. Since desorption is endothermic, it requires a supply of heat. Furthermore, it also requires a low partial pressure of CO2 around the sorbent. One way to solve both of these problems is to flow steam through the sorbent. However, some sorbents degrade quickly in the presence of steam at elevated temperatures. The steam production process is also energy intensive and requires a lot of expensive piping. It is possible to recover a lot of the steam used in the process but because of various losses there will be a net consumption of water, which is usually larger than the production of CO2 on a weight basis. The current invention addresses these issues by instead proposing and indirect heating system where hot water is flowed through the walls or closed channels of the sorbent cassette or filter in order to heat the sorbent, and a vacuum system is used to keep the partial pressure of CO2 at low levels. With this implementation there will be a large net production of water from the atmospheric air.

WO2023/144018A1 discloses a prior art DAC unit that uses pressure vessels or contactors to contain a sorbent filter. Atmospheric air is circulated through the contactor and sorbent filter within during an absorption cycle, CO₂ is absorbed by the sorbent filter during the absorption cycle. During a desorption cycle the contactors are sealed with a lower and upper lid to create a pressure vessel. Steam is used to heat the sorbent filters within the contactors and a vacuum pump is used to lower the partial pressure of CO₂ within the contactor during the desorption cycle. The sorbent filters are made up of segments that include a sorbent media contained within a mesh.

In current DAC processes, direct heating of the sorbent media with steam during the desorption phase is a common method of desorption. Indirect heating systems for use during the desorption phase of a DAC unit have been contemplated that use resistive electrical heating wires within the sorbent assemblies. Current sorbent formulations can require a thermal swing as well as a pressure swing to release captured CO₂ during the desorption cycle. One of the reasons that steam is currently used for desorption is that steam both transfers heat to the sorbent and lowers the CO₂ partial pressure around the sorbent. DAC processes that used electricity-based heating of the sorbent, indirect or direct, have an inherent disadvantage that the energy cannot be recovered for reuse by the electrical heating configuration, which is generally some form of resistance heating elements. Regardless of the heat source used for desorption, the partial pressure of CO₂ will need to be lowered during the desorption process, this is generally accomplished with a vacuum pump. The use of a vacuum pump with water vapor or steam is difficult as most vacuum pumps are not designed to work with any significant amount of water vapor. Vacuum pumps that are configured to work with water vapor at the levels present during the desorption cycle of a DAC unit are specialized and cost prohibitive, as well as requiring a significant amount of electrical or mechanical energy to operate.

### BRIEF SUMMARY

It is therefore a goal of the present invention to provide an indirect heating and cooling system for use with a carbon capture process which overcomes the above-mentioned disadvantage(s). The present invention overcomes the disadvantages of using steam during the desorption cycle of a DAC or carbon capture unit which consumes water, requires large amount of energy to produce the steam, and a specialized vacuum pump capable of functioning with water vapor.

The objective of the invention is achieved by, an indirect heat transfer system for use in a pressure vessel or contactor of a carbon capture unit, includes at least one sorbent filter supported by a frame, a sorbent filter shape defined by a shape of the frame, a flow path through the frame and the at least one sorbent filter, a fluid circuit within the frame and adjacent to a sorbent media of the at least one sorbent filter, the fluid circuit begins at an inlet and ends at an outlet of the frame of the at least one sorbent filter, the at least one sorbent filter, the frame and the fluid circuit extending in at least the z-direction along a central axis, flowing a CO₂ containing gas through the flow path and absorbing CO₂ and water vapor within the sorbent media of the at least one sorbent filter during an absorption phase, a heating fluid circulated through the fluid circuit and indirectly heating the at least one sorbent filter, and releasing water vapor and CO₂ from the at least one sorbent filter during a desorption phase, a cooling fluid circulated through the fluid circuit and extracting heat from the at least one sorbent filter and condensing a net positive amount of water vapor within the pressure vessel, a vacuum pump that lowers the partial pressure of CO₂ within the pressure vessel after the net positive amount of water vaper has been condensed, an amount of liquid water and an amount of CO₂ are extracted from the indirect cooling system.

In one embodiment an amount of steam is used to purge the sorbent filter within the contactor during the desorption cycle. Advantageously, the steam purge flow moves the released CO2 to the opposite end of the contactor, the side opposite the entry point of the steam purge flow. The steam purge flow is advantageous low and within a range of 25-200 grams per second. In one embodiment the steam purge flow rate is 50g/s for a contactor that contains 700kg of sorbent media. The steam purge flow advantageously allows for the desorption cycle to operate a higher pressure thereby reducing the workload of the vacuum pump and the amount of time required for desorption. In one embodiment a steam injector is used to provide the steam purge flow.

In one embodiment, the indirect cooling system may also include where the sorbent media is a solid sorbent.

In one embodiment, the indirect cooling system may also include where the heating fluid and the cooling fluid are water. In other embodiments the heating fluid and cooling fluid (heat transfer medium(s)) are advantageously part of a heat recovery process that includes at least one heat exchanger and a heat pump to recover the heat energy used to heat the sorbent media during the desorption phase in one contactor for use in the desorption process of another contactor or the carbon capture unit. In one embodiment, the heat transfer medium is Ethelyn glycol, or any other known fluid used for heat transfer, as required by a particular configuration.

In one embodiment, the indirect cooling system may also include where the sorbent filter is frustoconical in shape. The frame of the sorbent filter advantageously defines the shape of the sorbent filter and the sorbent media within the frame conforms to the shape of the sorbent filter. In other embodiments the shape of the sorbent filter is cylindrical, hexagonal or any other configuration that allows for a flow through the frame and sorbent media with indirect heating/cooling via a fluid circuit.

In one embodiment, the indirect cooling system may also include where the at least one sorbent filter further includes an end cap configured to force the flow through the frame and the sorbent media of the at least one sorbent filter. The end cap or support can advantageously include a reversal or redirected portion of the fluid circuit, that sends the heat transfer medium to the outlet of the fluid circuit of a particular sorbent filter. In another embodiment the sorbent filter may include several fluid circuits with independent inlets and outlets such that the heat transfer is configured to keep a uniform temperature along the axial length of the sorbent filter.

In one embodiment, the indirect cooling system may also include a flow restrictor that forces the flow through the frame and sorbent media of the at least one sorbent filter. The flow restrictor may advantageously be a separate component, such as a spacer or gasket, that is located at one end of the contactor, such as a spacer between the lid and manifold that supports the plurality of sorbent filters within the contactor.

In one embodiment, the indirect cooling system may also include where the pressure vessel is purged prior to the desorption cycle. The pressure vessel or contactor may advantageously be purged of moisture prior to the desorption cycle. A vacuum or reduction of pressure within the contactor may occur prior to the desorption cycle.

In one embodiment, the indirect cooling system may also include a manifold configured to support the at least one sorbent filter within the pressure vessel and distribute the heating fluid and cooling fluid to the inlet of the at least one sorbent filter and away from the outlet of the at least one sorbent filter.

In one embodiment, the indirect cooling system may also include where the fluid circuit further includes a coil of tubing configured to match the shape of the frame along an axial length of the central axis.

In one embodiment, the indirect cooling system may also include further includes a heat pump and at least one heat exchanger, where the internal fluid circuit transfers the heat energy of the heating fluid and cooling fluid between the at least one heat exchanger via the heat pump.

In one embodiment, the indirect cooling system of wherein the coil of tubing is imbedded within the sorbent media of the at least one sorbent filter.

In one embodiment, the indirect cooling system may also include where the sorbent media is in contact with an exterior of the coil of tubing within the frame of the at least one sorbent filter.

In one embodiment, a method of indirectly cooling a sorbent material includes the steps of configuring an indirect heat transfer system to comprise at least one sorbent filter, the at least one sorbent filter including a frame, a fluid circuit, and a sorbent media, configuring the fluid circuit within the frame of the at least one sorbent filter, configuring the sorbent media of the at least one sorbent filter within the frame, flowing a CO₂ containing gas through a flow path and absorbing CO₂ and water vapor within the at least one sorbent filter during an absorption phase, circulating a heating fluid through the fluid circuit during a desorption cycle to heat the at least one sorbent filter, releasing CO₂ and a net positive amount of water vapor from the at least one sorbent filter during the desorption cycle, cooling the at least one sorbent filter by flowing a cooling fluid through the fluid circuit and condensing the net positive amount of water vaper into a water flow, lowering the partial pressure of CO₂ after the net positive amount of water vaper has been condensed, capturing the CO₂ and the water flow released by the at least one sorbent filter during the desorption cycle.

In one embodiment, the method may also include where the indirect cooling system is configured within a pressure vessel.

In one embodiment, the method may also include including the step of configuring a manifold to support the at least one sorbent filter within the pressure vessel and distribute the heating fluid and cooling fluid to an inlet of the at least one sorbent filter and away from an outlet of the at least one sorbent filter.

In one embodiment, an indirect cooling system for use in carbon capture, includes a frame defined by a first manifold, a second manifold and a plurality of interconnected cells arranged around a central axis, a flow path configured to enter an inlet face of the frame, flow through the first manifold, the second manifold, the plurality of interconnected cells, and exit an outlet face of the frame, an internal fluid circuit arranged within the first manifold, the second manifold and each of the plurality of interconnected cells, the first manifold and second manifold, and the plurality of interconnected cells extending in the z-direction along the central axis, each of the plurality of interconnected cells defined by a plurality of cell walls arranged in a cell shape, a plurality of sorbent filters arranged within each of the plurality of cells, flowing a CO₂ containing gas through the flow path and absorbing CO₂ and water vapor within the plurality of sorbent filters during an absorption phase, a heating fluid circulated through the internal fluid circuit and heating each of the sorbent filters, and releasing an amount of water vapor and an amount of CO₂ from the plurality of sorbent filters during a desorption phase, a cooling fluid circulated through the internal fluid circuit and extracting heat from each of the plurality of sorbent filters and condensing the amount of water vapor, a vacuum pump that lowers the partial pressure of CO₂ within the indirect cooling system after the water vaper has been condensed, an amount of liquid water and the amount of CO₂ are extracted from the indirect cooling system. The frame of the indirect cooling system can advantageously be configured with a single manifold or manufactured as a single piece by additive manufacturing or other known method of manufacturing. The indirect cooling system advantageously circulates a heat transfer fluid through an internal fluid circuit that includes internal passages within the interconnected cells. The interconnected cells have several advantages over the prior art including, a sorbent can be coated on the interior walls of the cells, or a solid sorbent can be captured within the walls of the cells. Regardless of the implementation of the sorbent, heating of the sorbent is accomplished by flowing a heat transfer liquid through the internal fluid circuit which transfers heat to the sorbent without exposing the sorbent to another fluid, such as steam. This advantageously eliminates the necessity of additional water for steam generation, the degradation of the sorbent that can occur when exposed to steam, and the unavoidable increase in water vapor within the desorption vessel or contactor. A characteristic of current sorbents is the absorption of water as well as CO₂ during the absorption cycle. The indirect cooling system advantageously can generate water during the carbon capture process by condensing the water vapor that is released by the sorbent by flowing a heat transfer fluid through the internal fluid circuit to cool the interconnected cells. Condensing and capturing the water vapor has the additional advantage of creating an environment within the desorption vessel that is water vapor free or near water vapor free, enabling the use of conventional vacuum pumps to lower the partial pressure of CO₂. The use of a conventional vacuum pump saves capital during implementation and maintenance, as well as requiring less energy to operate in the absences of or significantly reduced amounts of water vapor.

In one embodiment the indirect cooling system recovers the energy used to heat or dry the sorbent via at least one heat exchanger and a heat pump to advantageously reduce the amount of energy required to operate a DAC unit. In one embodiment, both the heating fluid and cooling fluid transfer heat energy to at least one heat exchange via a heat pump, heat transfer can occur before or after the heating fluid and or cooling fluid has circulated through the internal fluid circuit. This configuration advantageously allows for the recovery of the heat energy used in the heating and cooling of the sorbent for reuse in the operation of the DAC unit. In one embodiment the heating fluid and cooling fluid are water. In one embodiment one of the at least one heat exchangers is used with a water reservoir or tank that stores recovered heat energy. In one embodiment the heating fluid heats the sorbent filters within the interconnected cell to about 40°C during the operation of the vacuum pump to create a small amount of water vaper to ensure air has been evacuated from the contactor or pressure vessel.

In one embodiment the frame, fluid circuit and sorbent filter are configured to keep the sorbent media of the sorbent filter a maximum distance of 20 mm from the heat transfer source (the fluid circuit or heat transfer enhancements). In one embodiment the distance between the inner and outer walls of the frame are between 10-20 mm with allows for a sorbent filter or sorbent media thickness within the frame of 10-20mm. In one embodiment the pressure drop of a gas flow through an indirect cooling system is advantageously within a range of 100-300 pascals with a pressure drop of 200 pascals being particularly advantageous.

Other technical features may be readily apparent to one skilled in the art from the following figures, descriptions, and claims.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example of a prior art DAC unit.
FIG. 2A illustrates a contactor from the prior art DAC unit of FIG. 1.
FIG. 2B illustrates a contactor in accordance with one embodiment.
FIG. 2C illustrates a cross-section of the contactor of FIG. 2B along cut plane A-A.
FIG. 2D illustrates a cross section of the contactor of FIG. 2A along cut plane B-B.
FIG. 3A illustrates an overhead view of a cross-section of an indirect cooling system in accordance with one embodiment.
FIG. 3B illustrates a partial side view of an indirect cooling system in accordance with one embodiment.
FIG. 3C illustrates a partial side view of an indirect cooling system in accordance with another embodiment.
FIG. 3D illustrates a side view of the indirect cooling system of FIG. 3B.
FIG. 3E illustrates a side view of the indirect cooling system of FIG. 3C.
FIG. 3F illustrates a partial internal view of the indirect cooling system of FIG. 3A.
FIG. 4A illustrates an exploded cross section of an embodiment of the present invention.
FIG. 4B illustrates an enlargement of section C-C of FIG. 4A.
FIG. 4C illustrates an enlargement of section D-D of FIG. 4A.
FIG. 5A illustrates an elevated view of an indirect cooling system in accordance with one embodiment.
FIG. 5B illustrates a partial cross-section of the indirect cooling system of FIG. 5A.
FIG. 6A illustrates an internal view of the indirect cooling system of FIG. 5A.
FIG. 6B illustrates an internal view of the fluid circuit of the indirect cooling system of FIG. 6A.
FIG. 6C illustrates an overhead view of the inlet side of the fluid circuit of FIG. 6B.
FIG. 6D illustrates an overhead view of the outlet side of the fluid circuit of FIG. 6B.
FIG. 6E illustrates an overhead view of the fluid circuit of FIG. 6B.
FIG. 6F illustrates an internal side view of the indirect cooling system of FIG. 6A.
FIG. 6G illustrates a side view of the fluid circuit of FIG. 6B.
FIG. 7A illustrates an overhead view of an interconnected cell of an indirect cooling system in accordance with one embodiment.
FIG. 7B illustrates the interconnected cell of FIG. 7A with the internal fluid circuit visible.
FIG. 7C illustrates the interconnected cell of FIG. 7A with a sorbent filter enclosed within the interconnected cell.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to apparatus and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus.

It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

Also, unless specified or limited otherwise, the terms "mounted", "connected", "supported", and "coupled" and variations thereof are used broadly and encompass direct and indirect mountings, connections, supports, and couplings. Further, "connected" and "coupled" are not restricted to physical or mechanical connections or couplings.

In addition, the term "adjacent to" may mean: that an element is relatively near to but not in contact with a further element; or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard as available a variation of 20 percent would fall within the meaning of these terms unless otherwise stated.

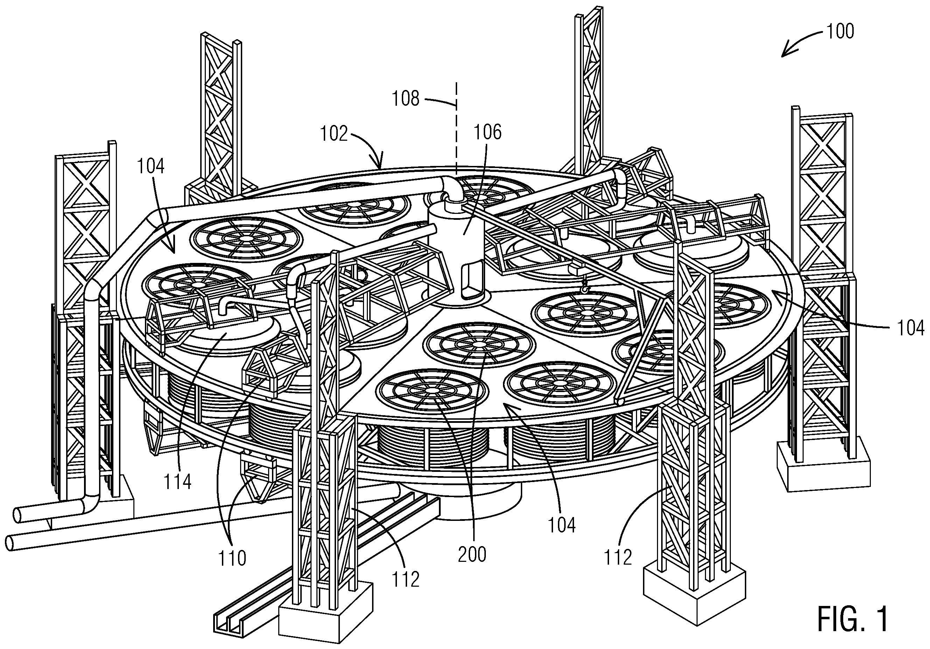

FIG. 1 illustrates an internal perspective view of a portion of the direct air capture system 100 used in WO2023/144018A1. The internal perspective view illustrates components of the direct air carbon capture unit 100 disposed within the fixed structural shell. The direct air carbon capture unit 100 includes a support 102 or frame defining sector-shaped absorption units 104 arranged around a central axis 108. All of the internal components of the direct air carbon capture unit 100 are carried by the fixed structural shell 102 mounted on legs 112 so that the fixed structural shell 102 is above a ground surface. The support 102 includes an upper plate including outlets and a lower plate including a corresponding number of inlets. A hub is coupled to the support 102 and rotatable about a central axis 108. The hub 106 is positioned in the center of the support 102 so that it can spin around the central axis 108 which passes internally through the hub 106. In addition, swing arms 110 are attached to the hub 106 on both sides of the support 102. Each Y-shaped swing arm 110 includes at least one lid 114 so that an upper lid 114 is coupled to the upper arm and a lower lid 114 is coupled to the lower arm. Preferably, the number of lids 114 and their arrangement on the Y-shaped swing arm 110 correspond to the number and position of the adsorption cells or contactors 200 per absorption carbon capture unit 100. In the shown embodiment, only the upper lids 114 are shown. Both the upper lid 114 and the lower lid 114 are movable between an open position and a closed position.

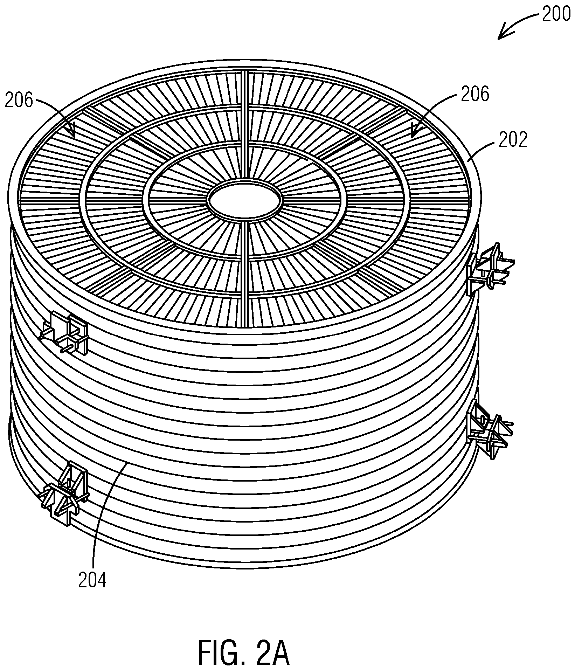

FIG. 2A is a contactor 200 or pressure vessel used in WO2023/144018A1 that has a cylindrical wall 204 with a sealing surface 202 and a plurality of sorbent filter segments 206 within the contactor 200. During the absorption cycle atmospheric air is circulated through the contactor 200 and the sorbent filter segments 206 absorb CO₂. Once the sorbent filter segments 206 have reached a set point in time or amount of absorbed CO₂ the contactor 200 is sealed with an upper and lower lid that also contain steam piping. During the desorption cycle the contactor 200 is sealed with an upper lid 114 and a lower lid 114. Once sealed the contactor 200 is filled with steam and the sorbent filter segments 206 are heated which causes the sorbent filter segments 206 to release CO₂. In some embodiments the contactors 200 may be purged prior to filling with steam. The sorbent filter segments 206 need to cool or dry out before the partial pressure of CO₂ can be lowered for capture. The steam can remain within the contactor 200 and cool over time or the steam and CO₂ mixture can be circulated to another process for separation and lowering of the partial pressure of CO₂.

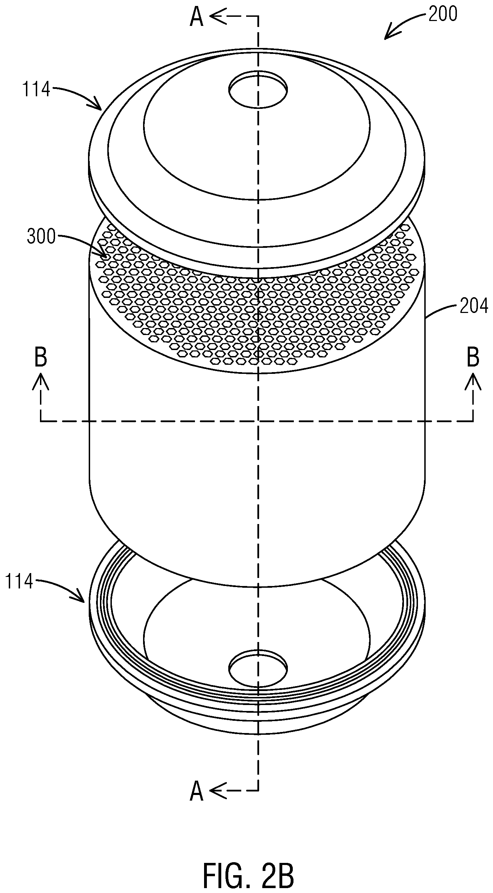

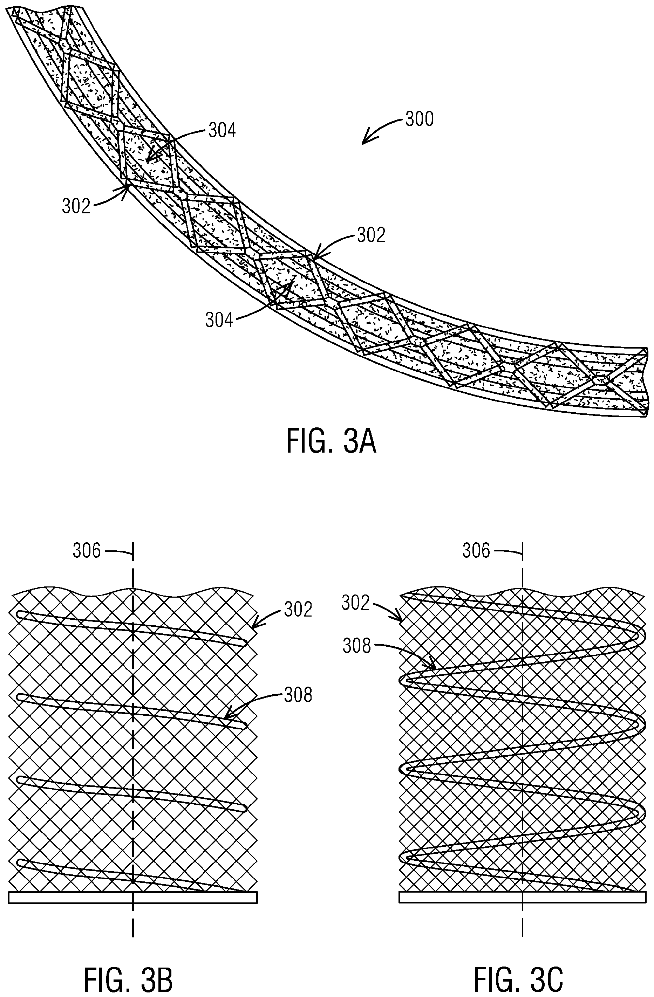

FIG. 2B is a contactor 200 that has been configured to contain an indirect cooling system 300 within the cylindrical wall 204. In this embodiment the indirect cooling system 300 is made up of several individual indirectly cooled filters 212, as seen in FIG. 3A through FIG. 3F, configured within the cylindrical wall 204 of the contactor 200. The contactor 200 has a lid 114 on the top and bottom of the cylindrical wall 204, shown in explode view in FIG. 2B. Depending on the embodiment, the lids 114 can include a manifold or other know distribution method to supply each of the individual fluid circuits 308 with a heat transfer medium 310 within the indirect cooling system 300. As disclosed in WO2023/144018A1 the lids 114 can be moved to another contactor 200 during the absorption cycle of a particular contactor 200 and a flow or air flow can pass through the interior of the cylindrical wall 204 of the contactor 200, in this embodiment the sorbent filters 304 are contained with the frames 302 of each of the indirectly cooled filters 212.

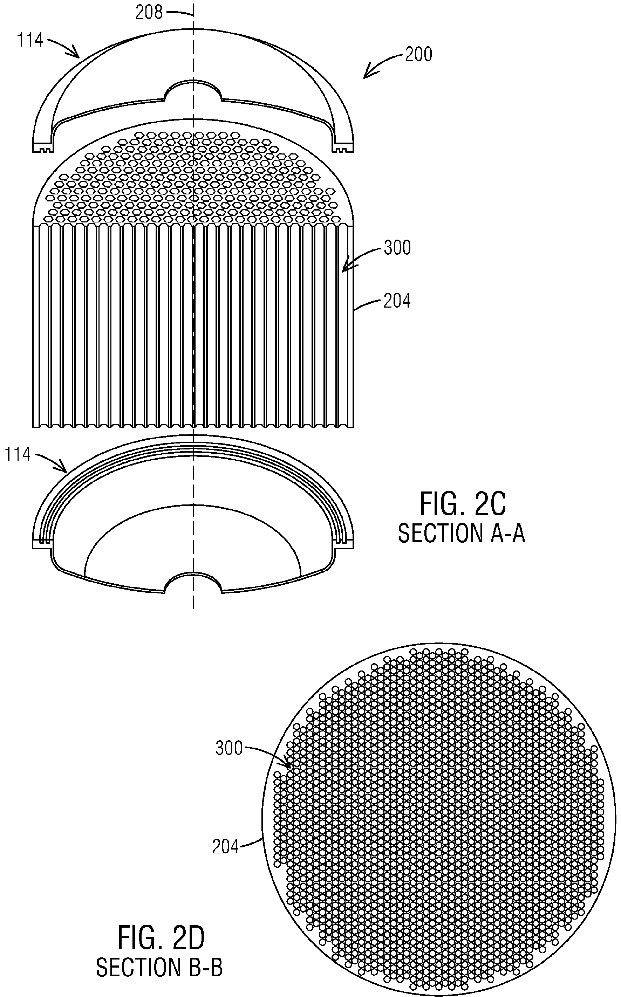

FIG. 2C is cross-sectional view of FIG. 2B through cut plane A-A. The individual indirectly cooled filters 212 can be seen to extend from one end of the cylindrical wall 204 to the opposite end along the central axis 208, filling the interior of the cylindrical wall 204.

FIG. 2D is a cross-sectional view of FIG. 2B through cut plain B-B. The interior of each individual indirectly cooled filters 212 are empty as a flow or air flow will enter one end of the contactor 200 and exit the other end. Depending on the embodiment, one or both lids 114 will have a manifold or other known method of supplying a heat transfer medium 310 into and out of each individual indirectly cooled filters 212. In one embodiment the frames 302 of the individual indirectly cooled filters 212 each contain a flow restrictor that forces the flow or air flow to pass through the frame 302 and the sorbent filter 304 within the frame 302 of each indirectly cooled filters 212. In another embodiment the flow restrictor can be a gasket or spacer between the cylindrical wall 204 and one of the lids 114 that is configured to block flow through the center of each individual indirectly cooled filters 212 and redirect the flow or airflow out of the contactor 200 via the space in between the individual indirect cooling systems 300, post filtration.

In FIG. 3A a partial section of an embodiment of the present invention is shown in cross section. The indirectly cooled filters 212 has a frame 302 that surrounds a sorbent filter 304 within the frame 302. In this embodiment the frame 302 is an inner and outer wire mesh, sheet or any known structure that can support the cylindrical indirectly cooled filters 212 and allow for a flow to pass through the frame 302.

The sorbent filter 304 can be any known configuration of sorbent, including a solid monolith, loose beads of coated polymer, or any other configuration that allows for a flow to circulate through the sorbent filter 304 and the sorbent media. In this embodiment the sorbent filter 304 is cylindrical in shape but any shape that corresponds to the shape of the frame 302 is possible. In this embodiment the frame 302 is a cylindrical shell or wire frame but any known structure or shape can be used that allows the sorbent filter 304 to be held within the frame 302 and allow a flow or air flow through the frame 302 and the sorbent filter 304. The sorbent filter 304 can be loose polymer beads or spheres coated with a sorbent and contained within a gas permeable material, such as a fabric or wire mesh.

Within or supported by the frame 302 is a fluid circuit 308 that allows for indirect heat transfer between a heat transfer medium 310 and the sorbent filters 304. The fluid circuit 308 can be attached to the inner and outer walls or meshes of the frame 302 or any configuration that allows for the replacement of the sorbent filter 304. The indirect heat transfer occurs when the tubing of the fluid circuit 308 is in contact with the structure of the frame 302 and the sorbent filter 304, heat is conducted between the heat transfer medium 310 and the sorbent filters 304. In this embodiment the fluid circuit 308 is a tube or tubing that wraps around the cylindrical frame 302. Heat transfer enhancing features can be added to the fluid circuit 308, such as fins, plates or any other known method of increasing surface area or contact between the sorbent filter 304 and fluid circuit 308.

The pitch or density of the tubing of the fluid circuit 308 can vary, as seen in FIG. 3B and FIG. 3C, by increasing the pitch or density of the tubing the amount of contact with the sorbent filter 304 within the frame 302 can be increase and thereby the amount of heat transfer between the fluid circuit 308 and the sorbent filter 304 can be configured. The size of the frame 302 can be varied to accommodate a larger or smaller sorbent filter 304 within, the heat transfer between the fluid circuit 308 and the sorbent filter 304 can be varied by the size of the sorbent filter 304 and the surrounding frame 302 and fluid circuit 308. In this embodiment the tubing of the fluid circuit 308 is contained within the frame 302 but the fluid circuit 308 can extend beyond the frame 302 of the indirect cooling system 300 and the sorbent filters 304 depending on the sorbent media used. For example, the frame 302 can be a sufficiently fine wire mesh that can contain a loose sorbent media and the helix of the fluid circuit 308 or fluid circuits 308 fit within the entire volume defined by the frame 302 of the indirect cooling system 300. In other embodiments the mesh of the frame 302 can be coarse, as seen in FIG. 3B through FIG. 3F for clarity, where the mesh of the frame 302 is only required to support the fluid circuit 308 and keep the sorbent filter 304 in place as the sorbent filter 304 has a gas permeable material to contain a loose sorbent.

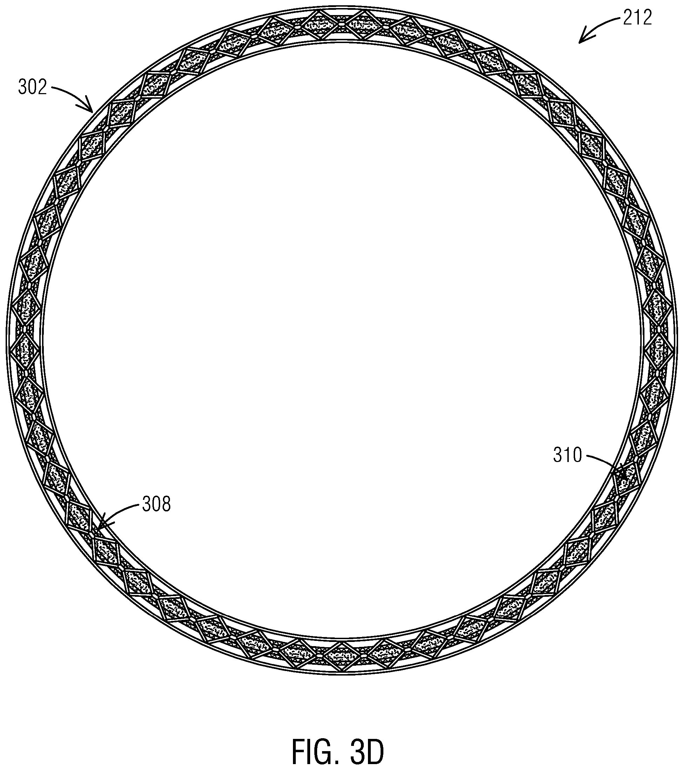

As seen in FIG. 3D, an embodiment of the indirect cooling system 300 is shown in cross section with a further internal view of a section of the tube of the fluid circuit 308, the sorbent filter 304 is not shown. The fluid circuit 308 is shown with a heat transfer medium 310 within the tubing of the fluid circuit 308. During the absorption phase or cycle of the carbon capture unit 100 the flow of CO₂ containing gas or air flow is circulated through the frame 302 and sorbent filter 304. The sorbent media within the sorbent filter 304 absorbs CO₂ and depending on the sorbent media used, an amount of water vapor. In direct air carbon capture units 100 atmospheric air is circulated through the contactors 200 and the indirectly cooled filters 212 of the indirect cooling system 300. Atmospheric air contains CO₂ gas as well as water vapor, the absorption of water vapor by the sorbent media is generally undesirable, particularly because most sorbent media will absorb more water vapor than CO₂, and results in the swelling of the sorbent media. For example, in solid amine sorbents that are configured as a polymer bead that is coated with the sorbent media, the absorbed water vapor causes the sorbent media to swell. During the desorption cycle or phase of the carbon capture unit 100, CO₂ is generally released from the sorbent media via a temperature or pressure swing. In this embodiment the tubing of fluid circuit 308 is configured to be surrounded by the sorbent filter 304 to allow for indirect heating or cooling of the sorbent media by flowing a heat transfer medium 310 through the fluid circuit 308.

As discussed above, in prior art carbon capture units 100 steam can be used to directly heat a sorbent media during the desorption cycle which will release the captured CO₂ along with the water vapor that was absorbed by the sorbent media, this creates a steam rich environment within the pressure vessel used to heat the sorbent media with steam, this is unavoidable when steam is used to directly heat the sorbent media. Specialized vacuum pumps are needed because, in order to reduce the partial pressure of the CO₂ for capture and extraction the steam needs to be condensed or separated, the introduced steam and the extracted water vaper, from the CO₂ as conventional vacuum pumps are not configured to operate in environments with a significant amount of water vapor. The amount of energy required to operate the vacuum pumps is significantly increased by the presence of steam above a threshold amount was well as the initial capital cost required to purchase and operate a conventional vacuum pump or vacuum pumps in water vapor environments. After the desorption cycle the sorbent media is still saturated with water and an amount of the steam has condensed and remains as water, this water has to be dried or evaporated away prior to the next absorption cycle, this contributes to the net loss of water associated with current carbon capture units 100.

A single indirect cooling system 300 or several indirect cooling systems 300 are configured within a contactor 200 such that once sealed within the contactor 200 during a desorption cycle the fluid circuits 308 can circulate a heating fluid as the heat transfer medium 310 around the sorbent filter 304 releasing the CO₂ and water vapor from the sorbent media. The sealed contactor 200 may be evacuated to create a vacuum or simply to purge the contactor 200 prior to the desorption cycle. Once all or a predetermined amount of CO₂ and water vapor have been released from the heated sorbent filters 304, the heat transfer medium 310 is switched to a cooling fluid to cool the sorbent filters 304 and the released water vapor within the contactor 200. Once sufficiently cooled, the water vapor will condense into water which can be captured as part of the operation of the carbon capture unit 100. Water can be produced in any environment or location that uses a direct air carbon capture unit 100, this is particularly advantageous in dry environments, such as deserts. Once the water has been condensed within the contactor 200 a conventional vacuum pump can be used to reduce the partial pressure of CO₂ as the water vapor is no longer present or substantially reduced within the contactor 200, thereby reducing the size of the vacuum pump required and the amount of energy needed to raise the partial pressure of CO₂ within the contactor 200.

The heat energy extracted from the sorbent filters 304 during the condensation of the captured water vapor can be recovered by circulating the heat transfer medium 310 to a heat exchanger. The heat energy can then be transferred with a heat pump configuration that allows for the reuse of the heat energy in another process of the carbon capture unit 100, such as heating or reheating the heat transfer medium 310 that is used as the heating fluid used to heat the sorbent filters 304 or another contactor 200 during the desorption cycle of the carbon capture unit 100. Reusing the heat energy will reduce the amount of energy required to heat the sorbent filters 304 in subsequent contactors 200 and thereby reduce operating costs.

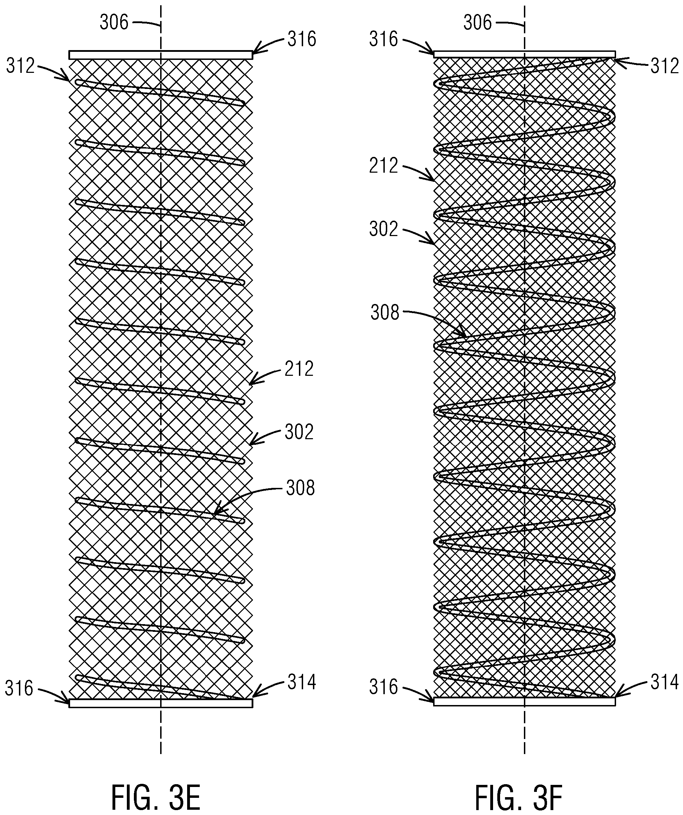

As can be seen in FIG. 3E and FIG. 3F, the indirect cooling system 300 can have supports 316 at the opposite ends of the cylindrical frames 302, that serve as the starting or end points of the frame 302 and add rigidity or structural support to the indirect cooling system 300. In other embodiments the supports 316 are not used or needed as the frame 302 is configured to be self-supporting. In other embodiments one or both of the supports also functions as a flow restrictor that forces the flow or air flow through the frame 302 and sorbent filter 304 rather than flowing straight through the hollow interior of the frame 302. In the embodiments seen in FIG. 3E and FIG. 3F, an inlet 312 of fluid circuit 308 is at a top of the indirect cooling system 300 and an outlet 314 is at the bottom of the indirect cooling system 300 along a central axis 306. In these embodiments, there is a single fluid circuit 308 that circulates from the top to the bottom of the indirect cooling system 300, in other embodiments the direction of the heat transfer medium 310 can be reversed or there can be multiple fluid circuits 308 within a single indirect cooling system 300. The direction of flow can be the same in all fluid circuits 308 or can be alternated as required by the heat transfer requirements of a particular embodiment. In other embodiments the inlet 312 and outlet 314 are on the same side of the frame 302, the fluid circuit 308 sends the heat transfer liquid from one end of the frame 302 to the opposite end along the central axis 306 and back to the first end.

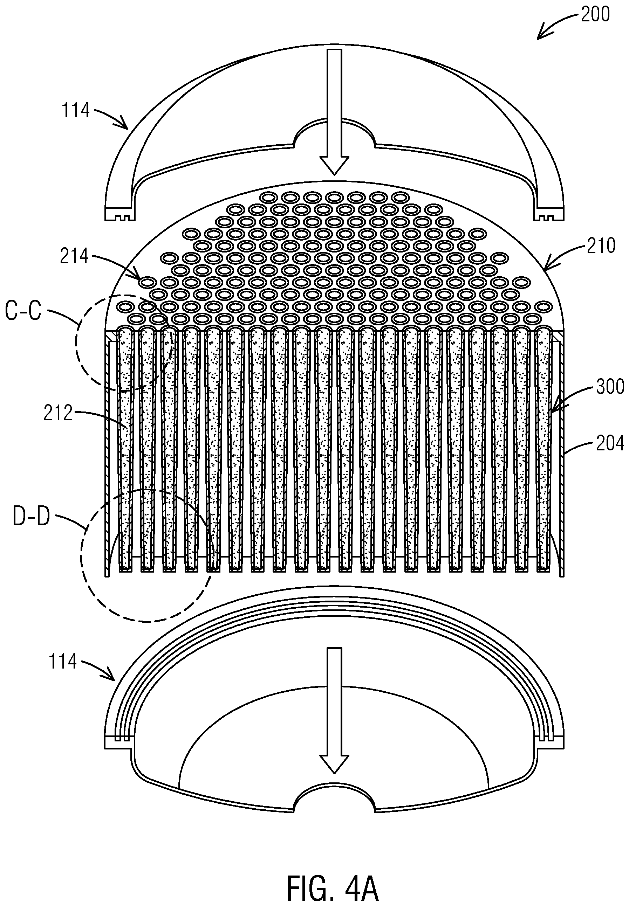

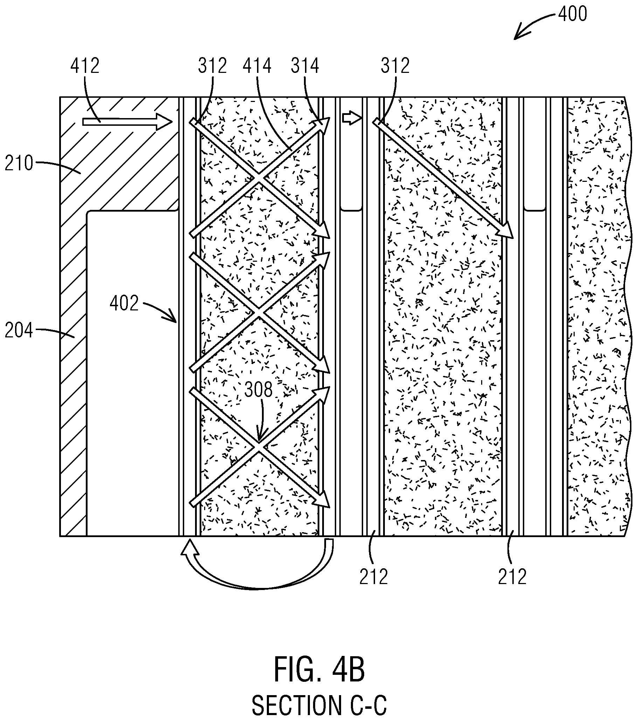

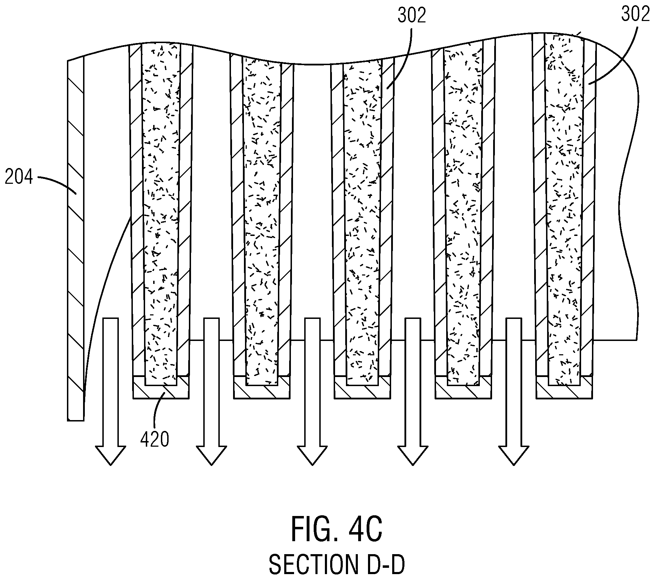

FIG. 4A is an exploded cross-sectional view of another embodiment of a contactor 200 with an indirect cooling system 300 within the cylindrical wall 204 of the contactor 200. This embodiment includes a manifold 210 that is attached to an intake end 214 of each of the individual indirectly cooled filters 212. The manifold 210 includes passages for supplying the inlet 312 of each indirectly cooled filter 212 with a heat transfer medium 310 and redirecting the heat transfer medium 310 via the outlet 314 of each indirectly cooled filter 212 back to the manifold 210. The manifold 210 can be attached to the cylindrical wall 204 of the contactor 200 or can be used as a support or frame for the indirect cooling system 300 that locates and supports each of the indirectly cooled filters 212 allowing for the indirect cooling system 300 to be installed and removed as an assembly. Alternatively, a separate mounting structure can be used to support and locate the indirectly cooled filters 212 during installation and removal, e.g. a spacer between the manifold 210 and the indirect cooling system 300. The individual indirectly cooled filters 212 can be substantially cylindrical in shape or can have a tapered end, as seen in FIG. 4A, to increase the spacing between the ends of the indirectly cooled filter 212 not attached to the manifold 210, the opposite end 216. The opposite ends 216 also includes an end cap 420 or support 316 that closes the indirectly cooled filter 212 and redirects the fluid circuit 408 back to the intake end 214 of the indirectly cooled filter 212 see FIG. 4B and FIG. 4C.

In the embodiment of FIG. 4A the flow or air flow enters the contactor 200 at the location of the manifold 210, flows through the indirect cooling system 300 and exits the indirectly cooled filters 212 and exits the contactor 200, as shown by the arrows.

FIG. 4B is an enlargement of section C-C of FIG. 4A. In this embodiment the manifold 210 is attached to the cylindrical wall 204 of the contactor 200. The arrows represent the internal passages or fluid circuit 308 within the manifold 210 and each indirectly cooled filter 212 in FIG. 4B. At the end cap 420 or support 316 of each indirectly cooled filter 212 the fluid circuit 308 is redirected towards the outlet 314 of the indirectly cooled filter 212, the exact configuration can depend on the particular embodiment of the indirectly cooled filter 212. In embodiments that use a helix shaped or configured fluid circuit 308 within the indirectly cooled filter 212, as seen in FIG. 3E and 3F, can redirect the heat transfer medium 310 down the entire length of the frame 302 or can redirect the heat transfer medium 310 at any time as required by a particular embodiment, rather than only at the end cap 420.

FIG. 4C is an enlargement of section D-D of FIG. 4A. The flow of air flow exits the indirectly cooled filters 212 at any point along the length of the frame 302 of the indirectly cooled filter 212. The end cap or support 316 can be configured to contain the sorbent filter 304 or can be a configured to be a dead end or dead head the flow or airflow. In this embodiment the end cap or support 316 includes a portion of the fluid circuit 308 which is configured to redirect the heat transfer medium 310 to the outlet 414 of the indirectly cooled filter 212.

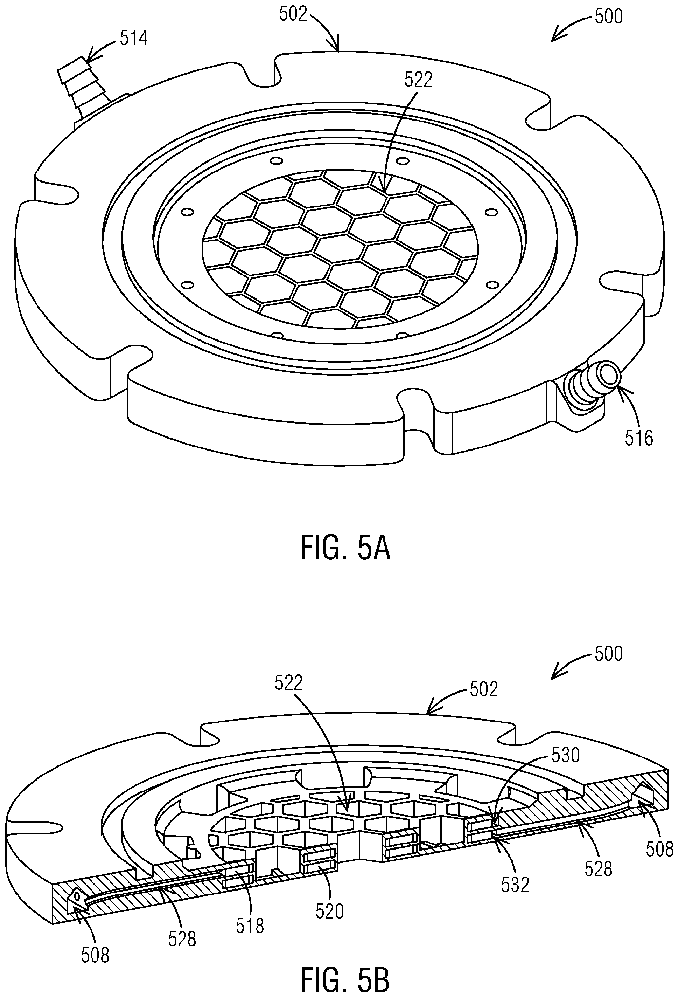

In FIG. 5A an embodiment of a frame 502 of an indirect cooling system 500 is shown. In practice the indirect cooling system 500 would be contained within a contactor 200 or equivalent with a flow of atmospheric air or other CO₂ containing gas or fluid flowing through the contactor 200 and the indirect cooling system 500. The contactor 200 can contain a single frame 502 with an internal fluid circuit or several frames 502 can be stacked on top of each other to fill the contactor 200 or any enclosed volume/pressure vessel to form an indirect cooling system 500. The frame 502 can be manufactured by any known method including additive manufacturing, the embodiment seen in FIG. 5A has a single piece frame 502. In other embodiments multiple pieces can be joined together to create the frame 502 via brazing, welding or other known method. The frame 502 is substantially disc shaped to correspond with a cylindrical contactor 200, the central portion or flow path of the frame 502 is made up of a configuration of interconnected cells 522.

A view in cross section of the indirect cooling system 500 of FIG. 5A can be seen in FIG. 5B. In this embodiment the frame 502 has a manifold 508 on the inlet and outlet sides of the frame 502. A cross section of the fluid circuit 510 can be seen, particularly the portions of the manifolds 508, feed passages 528, inner upper manifold 530, inner lower manifold 532, first cavity 518, second cavity 520.

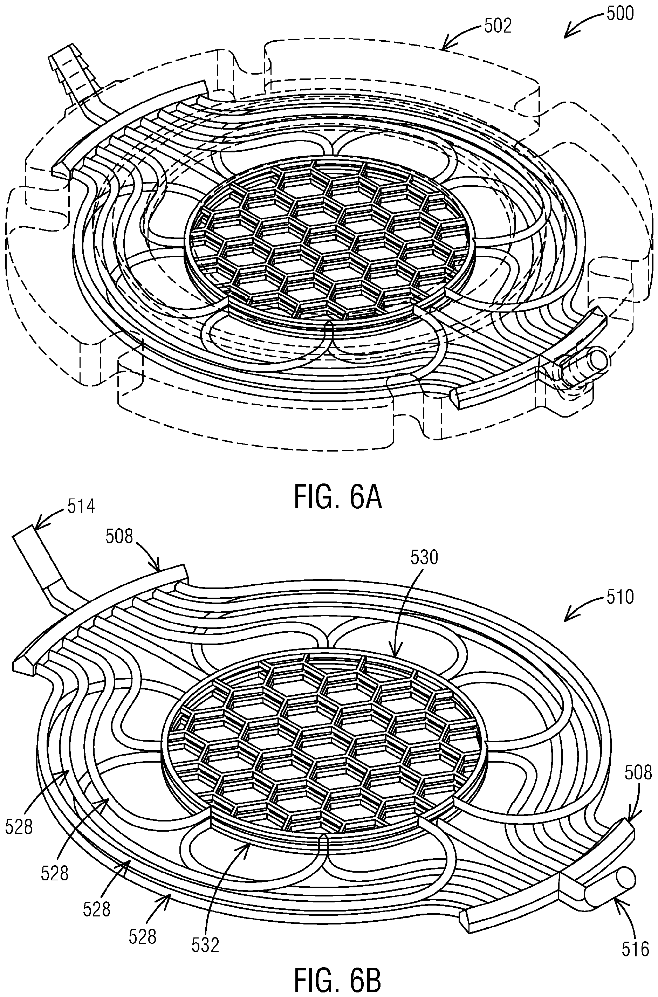

A view of the fluid circuit 510 of the indirect cooling system 500 of FIG. 5A can be seen in FIG. 6A and FIG. 6B. In this embodiment the fluid circuit 510 resides entirely within the solid structure of the frame 502 and is substantially symmetrical about a center line of the frame 502. In this embodiment the fluid circuit 510 has a set of manifolds 508 in fluid communication with both the inlet 514 and outlet 516. The manifolds 508 are configured to be in fluid communication with several feed passages 528 that distribute the heat transfer medium 310 to various locations on either the inner upper manifold 530 or inner lower manifold 532. The feed passages 528 are numbered and distributed to allow for even distribution within the inner upper manifold 530 and inner lower manifold 532. The number, size, and configuration of the feed passages 528 can be adjusted based on the flow rate or heat transfer requirements of a particular embodiment.

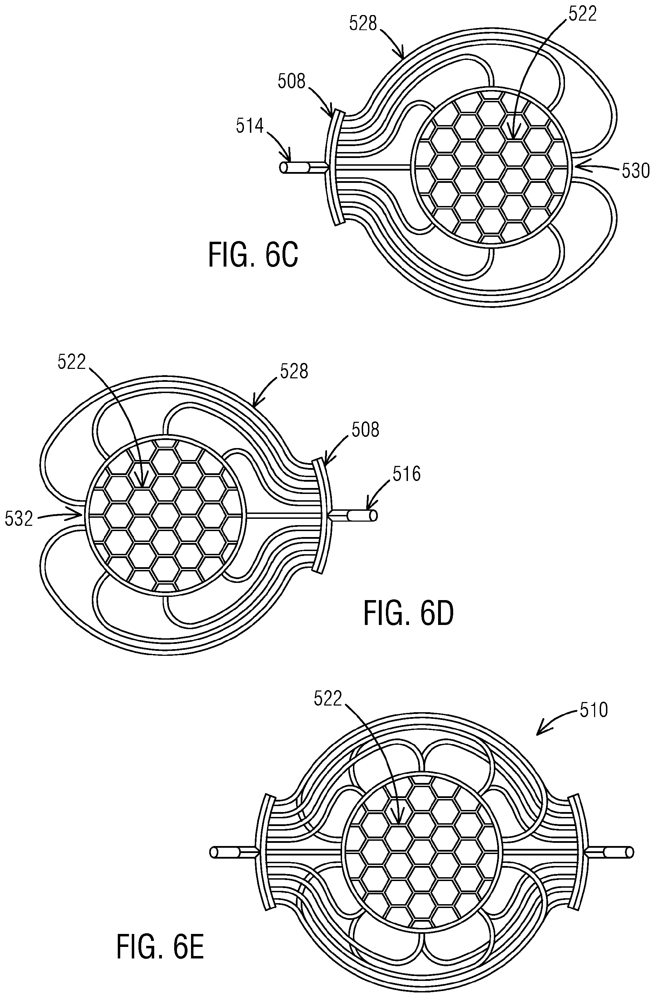

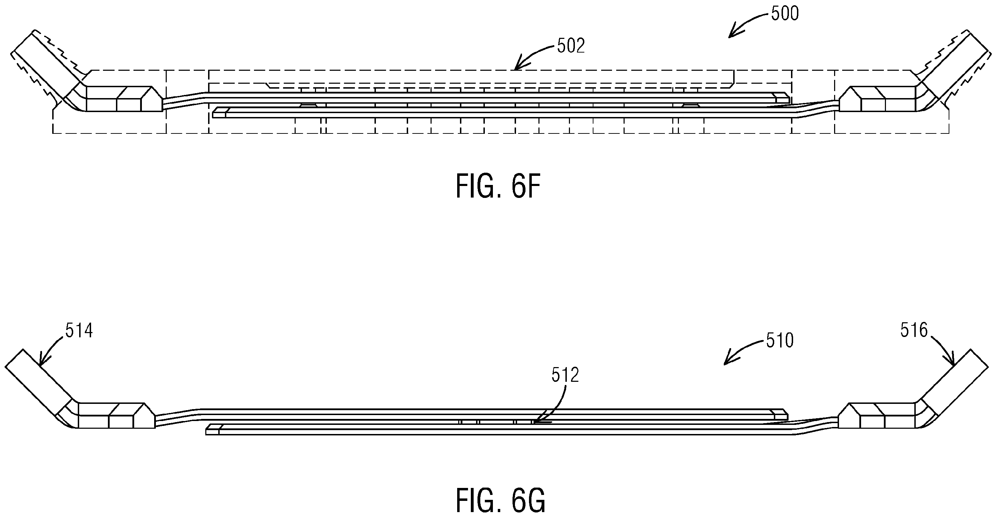

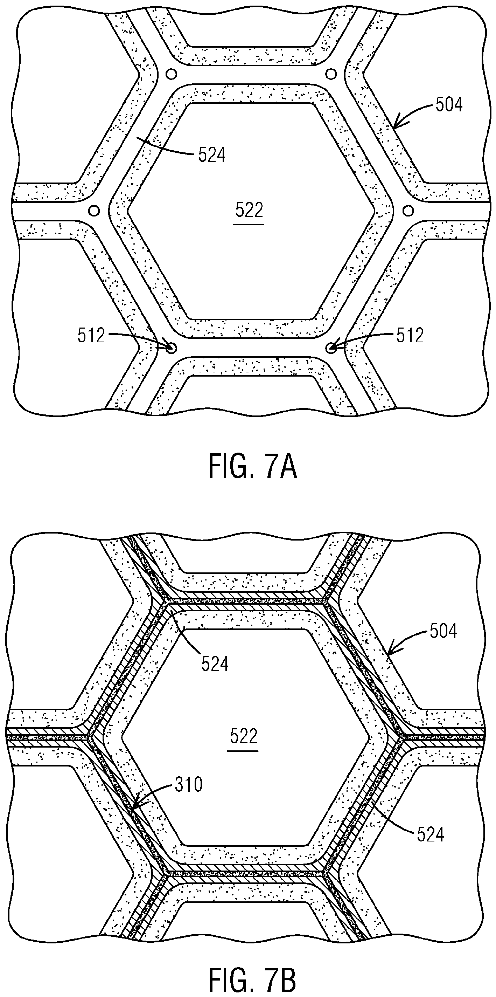

As seen in FIG. 6A, FIG. 6B, FIG. 6F, and FIG. 6G the fluid circuit 510 is substantially symmetrical with the inner upper manifold 530 and inner lower manifold 532 stack on top of each other such that the interconnected cells 522 are aligned, as seen in FIG. 6E. The heat transfer medium 310 enters the inlet 514 then fills the inlet side manifold 508 and is distributed through the feed passages 528 to the inner upper manifold 530. Once the heat transfer medium 310 has filled the inner upper manifold 530 it is distributed through the fluid passages of the interconnected cells 522. The interconnected cells 522 in this embodiment are hexagonal in shape but any configuration that can surround a sorbent filter 304 can be used. Looking at one wall 524 of an individual interconnected cell 522, each wall 524 has a first cavity 518 or upper cavity that is directly above a second cavity 520 or lower cavity, see FIG. 5B. The flow rate of the heat transfer medium 310 and the rate of heat transfer can be configured by the metering holes 512 that are located at the intersections of the walls 524 of each of the central interconnected cell 522, as seen in FIG. 6G and 7A.

The heat transfer medium 310 is circulated through the first cavities 518 it is then circulated through the metering holes 512 into the second cavities 520. After entering the second cavities 520 the heat transfer medium 310 fills and exits the inner lower manifold 532, the feed passages 528, the outlet side manifold 508 and exits the outlet 516. After exiting the fluid circuits 510 the heat transfer medium 310 can be sent to a heat exchanger for reheating or heat recovery.

In FIG. 6C an overhead view of the inlet 514 side or inner upper manifold 530 side of the fluid circuit 510 can be seen. The even distribution of the feed passages 528 into the inner upper manifold 530 can be seen. The interconnected cells 522 have partial or upper portions of the cells that are evenly distributed around the inner upper manifold 530, the size and distribution of the particular cells can be adjusted as required by a particular embodiment.

In FIG. 6D an overhead view of the outlet 516 side or inner lower manifold 532 side of the fluid circuit 510 can be seen. The distribution of the second cavities 520 of the interconnected cells 522 of the outlet side of the fluid circuit 510 is identical to the distribution of the first cavities 518 of the inlet side of the fluid circuit 510 to allow for alignment of the first cavities 518 and second cavities 520.

In FIG. 6E an overhead view of the inlet 514 side or inner upper manifold 530 side of the fluid circuit 510 on top of the outlet 516 side or inner lower manifold 532 side of the fluid circuit 510 can be seen. The inner upper manifold 530 and inner lower manifold 532 are aligned such that they are directly over one another and the individual interconnected cells 522 are also aligned. Specifically, each of the first cavities 518 and the second cavities 520 of the walls 524 of the interconnected cells 522 are directly above one another, as seen in FIG. 5B.

In FIG. 6F a side view of the fluid circuit 510 can be seen within the frame 502. The fluid circuit 510 is distributed to allow heat transfer along the height or thickness of the frame 502 and sorbent media 504 that are surrounded by the individual interconnected cells 522.

In FIG. 6G a side view of the fluid circuit 510 can be seen. In this embodiment there are 6 metering holes 512 located at the intersections of the walls 524 of the central interconnected cell 522, in the side view only 4 of the metering holes 512 can be seen. It is understood that the flow rate of the heat transfer medium 310 and the heat transfer rate between the heat transfer medium 310 and the sorbent filters 304 can be configured by the size, location and quantity of the metering holes 512. The exact distribution and configuration of the metering holes 512 is determined by the requirements of each embodiment.

In this embodiment the interconnected cells 522 are hexagonal shaped but any configuration is possible that allows for the interconnection, and fluid communication, of the internal passages, first cavities 518 and second cavities 520, within the walls 524 of each interconnected cell 522, see FIG. 7A and FIG. 7B. In this embodiment an internal fluid circuit 510 is defined by a manifold 508 or manifolds 508, feed passages 528, inner upper manifold 530, inner upper manifold 530, metering holes 512, a series of first cavities 518 and a series of second cavities 520. In this embodiment the manifold 508 or manifolds 508 are an annular cavity or annular segments within the outer diameter of the frame 502. The manifold 508 is in fluid communication with the series of feed passages 528 that are in fluid communication with the internal passages of interconnected cells 522. In this embodiment each wall 524 of each interconnected cell 522 has a first cavity 518 and a second cavity 520 which allow for the metering or the control of the flow within the cavities. The long diagonal distance of the interconnected cells 522 is about 25mm and the wall lengths are about 12.5mm.

FIG. 7A is an overhead view of the central interconnected cell 522 of the indirect cooling system 500 which shows six metering holes 512 at the intersection of the walls 524 of the central interconnected cell 522. In other embodiments the metering holes 512 can be elongated, rectangular or any shape that allows for the metering of the heat transfer medium 310 between the inner upper manifold 530 and the inner lower manifold 532. The location of the metering holes 512 can be moved to other areas of the gap between the inner upper manifold 530 and inner lower manifold 532, as required by any particular embodiment of the indirect cooling system 500.

In FIG. 7B an overhead view of the interconnected cell 522 seen in FIG. 7A is shown with the heat transfer medium 310 within the inner upper manifold 530 or inner lower manifold 532 within the wall 524 of the interconnected cell 522. An embodiment of a sorbent coating or sorbent media 504 is shown on the walls 524 of the interconnected cells 522. The sorbent media 504 can be a loose sorbent packed within each of the interconnected cells 522 or can be a coating as seen in at least FIG. 7B, any known configuration of sorbent media can be used or adapted to a particular embodiment.

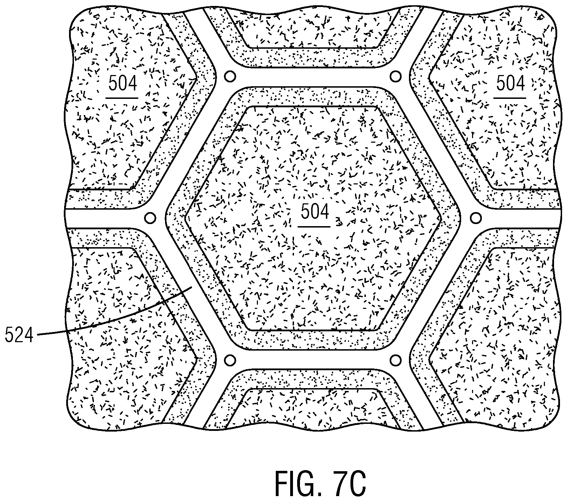

In FIG. 7C an overhead view of the interconnected cell 522 seen in FIG. 7A is shown with a representation of the sorbent media 504 within the interconnected cell 522. In this embodiment the sorbent media 504 can be a solid monolith with pours that allow the flow of air or a CO₂ containing gas to flow through the sorbent media 504 within the interconnected cell 522. In other embodiments the sorbent media 504 can be a mesh that contains a loose sorbent media and is configured to fit within the interconnected cell 522.

Although various embodiments that incorporate disclosed concepts have been shown and described in detail herein, those skilled in the art can readily devise many other varied embodiments that still incorporate these disclosed concepts. Disclosed embodiments are not limited to the specific details of construction and the arrangement of components set forth in the description or illustrated in the drawings. Disclosed concepts may be implemented by other implementations, and of being practiced or of being carried out in various ways, which now would become apparent to one skilled in the art.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A indirect heat transfer system (300) for use in a pressure vessel (200) of a carbon capture unit (100), comprising:
at least one sorbent filter (212) supported by a frame (302), a sorbent filter shape defined by a shape of the frame (302);
a flow path through the frame (302) and the at least one sorbent filter (212),
a fluid circuit (308) within the frame (302) and adjacent to a sorbent media (504) of the at least one sorbent filter (212),
the fluid circuit (308) begins at an inlet (312) and ends at an outlet (314) of the frame (302) of the at least one sorbent filter (212),
the at least one sorbent filter (212), the frame (302) and the fluid circuit (308) extending in at least the z-direction along a central axis (306),
flowing a CO₂ containing gas through the flow path and absorbing CO₂ and water vapor within the sorbent media (504) of the at least one sorbent filter (212) during an absorption phase,
a heating fluid (310) circulated through the fluid circuit (308) and indirectly heating the at least one sorbent filter (212), and releasing water vapor and CO₂ from the at least one sorbent filter (212) during a desorption phase,
a cooling fluid (310) circulated through the fluid circuit (308) and extracting heat from the at least one sorbent filter (212) and condensing a net positive amount of water vapor within the pressure vessel (200),
a vacuum pump that lowers the partial pressure of CO₂ within the pressure vessel (200) after the net positive amount of water vaper has been condensed,
an amount of liquid water and an amount of CO₂ are extracted from the indirect cooling system (300).

2. The indirect cooling system (300) of claim 1 wherein the sorbent media (504) is a solid sorbent.

3. The indirect cooling system (300) of claim 1 wherein the heating fluid (310) and the cooling fluid (310) are water.

4. The indirect cooling system (300) of claim 1 wherein the sorbent filter (212) is frustoconical in shape.

5. The indirect cooling system (300) of claim 1 wherein the at least one sorbent filter (212) further comprises an end cap (316) configured to force the flow through the frame (302) and the sorbent media (504) of the at least one sorbent filter (212).

6. The indirect cooling system (300) of claim 1 further comprising a flow restrictor that forces the flow through the frame (302) and sorbent media (504) of the at least one sorbent filter (212).

7. The indirect cooling system (300) of claim 1 wherein the pressure vessel (200) is purged prior to the desorption cycle.

8. The indirect cooling system (300) of claim 1 further comprising a manifold (210) configured to support the at least one sorbent filter (212) within the pressure vessel (200) and distribute the heating fluid (310) and cooling fluid (310) to the inlet (312) of the at least one sorbent filter (212) and away from the outlet (314) of the at least one sorbent filter (212).

9. The indirect cooling system (300) of claim 1 wherein the fluid circuit (308) further comprises a coil of tubing configured to match the shape of the frame (302) along an axial length of the central axis (306).

10. The indirect cooling system (300) of claim 9 wherein the sorbent media (504) is in contact with an exterior of the coil of tubing within the frame (302) of the at least one sorbent filter (212).

11. The indirect cooling system (300) of claim 9 wherein the coil of tubing is imbedded within the sorbent media (504) of the at least one sorbent filter (212).

12. The indirect cooling system (300) of claim 1 further comprising:
a heat pump and at least one heat exchanger,
wherein the internal fluid circuit (308) transfers the heat energy of the heating fluid (310) and cooling fluid (310) between the at least one heat exchanger via the heat pump.

13. A method of indirectly cooling a sorbent material (504) comprising the steps of:
configuring an indirect heat transfer system (300) to comprise at least one sorbent filter (212),
the at least one sorbent filter (212) including a frame (302), a fluid circuit (308), and a sorbent media (504),
configuring the fluid circuit (308) within the frame (302) of the at least one sorbent filter (212),
configuring the sorbent media (504) of the at least one sorbent filter (212) within the frame (302),
flowing a CO₂ containing gas through a flow path and absorbing CO₂ and water vapor within the at least one sorbent filter (212) during an absorption phase,
circulating a heating fluid (310) through the fluid circuit (308) during a desorption cycle to heat the at least one sorbent filter (212),
releasing CO₂ and a net positive amount of water vaper from the at least one sorbent filter (212) during the desorption cycle,
cooling the at least one sorbent filter (212) by flowing a cooling fluid (310) through the fluid circuit (308) and condensing the net positive amount of water vaper into a water flow,
lowering the partial pressure of CO₂ after the net positive amount of water vaper has been condensed,
capturing the CO₂ and the water flow released by the at least one sorbent filter (212) during the desorption cycle.

14. The method of claim 13 wherein the indirect cooling system (300) is configured within a pressure vessel (200).

15. The method of claim 14 including the step of configuring a manifold (210) to support the at least one sorbent filter (212) within the pressure vessel (200) and distribute the heating fluid (310) and cooling fluid (310) to an inlet (312) of the at least one sorbent filter (212) and away from an outlet (314) of the at least one sorbent filter (212).
